# EUROPÄISCHE PATENTANMELDUNG

(11) **EP 0 943 276 A1**
(43) Veröffentlichungstag der Anmeldung: **22.09.1999**
(21) Anmeldenummer: 98124652.3
(22) Anmeldetag: 24.12.1998
(51) Int. Cl.: A47J 37/07

(54) **Anordnung zur Erzeugung einer Grillkohlenglut**

(30) Priorität: 09.01.1998 DE 29800258 U; 28.01.1998 DE 19803125
(71) Anmelder: Fuchs, Kurt, 63526 Erlensee (DE)
(72) Erfinder: Fuchs, Kurt, 63526 Erlensee (DE)
(74) Vertreter: Stoffregen, Hans-Herbert, Dr. Dipl.-Phys.

(57) **Zusammenfassung**

Um Holzkohle auf eng begrenztem Raum entfachen zu können, wird Holzkohle in einem eigensteifen brennbaren Behältnis (10) angezündet, in dessen Bodenbereich (12) Anzünder (38, 40, 42, 44) fixiert sind.

## Beschreibung

Die Erfindung bezieht sich auf eine Anordnung zur Erzeugung einer Grillkohleglut.

Um zum Grillen Glut zu erhalten, wird üblicherweise Grillkohle in einen Grill gegeben, um mittels Anzünder die Kohle zu entfachen. Hierzu ist es erforderlich, dass in den Grill in einem Umfang Kohle gefüllt wird, dass die entsprechende Aufnahme im hinreichenden Umfang gefüllt ist. Dabei ist immer wieder festzustellen, dass erst dann eine besonders gute Glut entsteht, wenn das Grillen selbst beendet ist. Bei Verwendung relativ großer Grills wird zudem unnötig viel Grillkohle benötigt, ohne dass diese voll genutzt wird.

Aus dem DE 29 00 115 U1 ist ein Einweg-Grillset bekannt, das in einem Außengehäuse eine hitzeisolierende Innenwandung, ein Stützgestell bestimmt für synthetische Holzkohleblöcken sowie ein Rost aufweist.

Der Erfindung liegt das Problem zugrunde, eine Anordnung der eingangs genannten Art zur Verfügung zu stellen, mit der kleine Mengen an Grillkohle im erforderlichen Umfang angezündet werden können und eine Glut entsteht, die voll ausnutzbar ist. Dabei soll auch sichergestellt sein, dass die Glut auf verhältnismäßig kleinem Raum zur Verfügung steht.

Erfindungsgemäß wird das Problem im wesentlichen dadurch gelöst, dass in einem brennbaren Behältnis mit eigensteifer Bodenwandung und zumindest bereichsweise eigensteifer Seitenwandung sowie einer Kopfwandung Holzkohle eingebracht ist, dass in zumindest einer Seitenwandung eine erste Öffnung einbringbar ist, dass von oder in etwa von der Öffnung ausgehend entlang der Bodenwandung ein Anzünder verläuft und dass in der Kopfwandung und/oder einer Seitenwandung eine zweite Öffnung einbringbar ist.

Erfindungsgemäß wird ein brennbarer Behälter zur Verfügung gestellt, der selbst als Feuerstelle dient, wobei die zum Anzünden der Kohle benötigten Anzünder bereits in dem Behältnis vorhanden sind. Um Glut zu erzeugen, ist es nur noch erforderlich, die Öffnungen einerseits in der zumindest einen Seitenwandung und andererseits in der Kopfwandung und/oder einer Seitenwandung einzubringen sowie den im bodenseitigen Bereich der Seitenwandöffnung vorhandenen Anzünder zu entfachen, so dass die Holzkohle im erforderlichen Umfang brennen kann. Dies wird dadurch unterstützt, dass das Behältnis selbst brennbar ist, also hinreichend Feuer zur Verfügung gestellt wird, um die Holzkohle zum Glühen zu bringen. Durch die Öffnungen ergibt sich eine Kaminwirkung, wodurch das Brennen der Kohle beschleunigt wird.

Durch die Form des Behältnisses bedingt liegt die Holzkohle auf eng begrenztem Raum, so dass demzufolge die Glut auch konzentriert zur Verfügung steht. Dies bedeutet, dass mit einer relativ geringen Menge an Holzkohle eine Glut erzeugt werden kann, mit der im erforderlichen Umfang Grillgut gebraten werden kann.

Insbesondere sieht die Erfindung vor, dass der brennbare Behälter eine Quaderform aufweist und vollständig eigensteif ausgebildet ist. Dabei kann es sich bei dem Behälter um einen Karton oder ein Kartonmaterial wie insbesondere Wellpappe handeln. Ferner sollte in jeder Seitenwandung im Bereich der Bodenwandung jeweils eine erste Öffnung einbringbar sein, von der ein vom Behältnisäußeren her ein Anzünder zugänglich ist. Ferner sollten in der Kopfwandung zumindest zwei Öffnungen vorhanden sein. Durch die im Bodenbereich als auch im Kopfbereich vorhandenen Öffnungen kann sich ein hinreichender Zug ausbilden, um die Holzkohle bzw. das Behältnis nach dem Entfachen der Anzünder schnell zum Brennen zu bringen, so dass in relativ kurzer Zeit die erforderliche Glut auf eng begrenztem Raum zur Verfügung steht. Dabei erfolgt aufgrund der verwendeten Materialien ein rückstandsfreies und damit umweltfreundliches Verbrennen.

Die Anzünder selbst sollten eine Quaderform aufweisen, wobei die von den ersten in den Seitenwandungen vorhandenen Öffnungen ausgehenden Anzünder entlang von sich unter einem rechten Winkel schneidenden Geraden verlaufen können. Mit anderen Worten bilden die Anzünder entlang des Bodens des Behältnisses ein Kreuz.

Um sicherzustellen, dass sich die Anzünder bei Gebrauch der Anordnung im Bereich der ersten Öffnungen befinden , sollten erstere mit dem Boden verbunden wie verklebt sein. Alternativ können im Boden Vertiefungen verlaufen, in die die Anzünder eingebracht sind. Dabei können die Anzünder in einem Zwischenboden fixiert sein, der in das Behältnis einbringbar ist. Hierdurch ist ein einfaches Bestücken gegeben. Die Kohle selbst sollte in einer brennbaren Aufnahme wie Tüte in das Behältnis wie Karton eingebracht werden, so dass dieses nicht verschmutzt wird bzw. Staub nicht nach außen gelangen kann.

Um die ersten und zweiten Öffnungen auszubilden, sollten die Seitenwandungen bzw. die Kopfwandung in entsprechenden Bereichen perforiert sein. Dabei kann sowohl die erste als auch die zweite Öffnung die Form eines Dreiecks aufweisen, wobei der Basisschenkel entlang der Bodenwandung bzw. der Seitenwandung verläuft. Zum Öffnen dieser Bereiche werden die von einer Perforation umgebenen Abschnitte zunächst in das Behältnis hineingedrückt und sodann nach außen geklappt. Zur Vereinfachung ist in der Spitze des jeweiligen Dreiecks ein Loch vorgesehen, in das ein Finger eingreifen kann.

Mittig in der als verschließbarer Deckel ausgebildeten Kopfwandung kann des weiteren eine Handhabe vorgesehen sein, um das Behältnis problemlos transportieren zu können.

Das Volumen des quaderförmigen Behältnisses sollte auf ein Fassungsvermögen von 1 bis 2kg, insbesondere in etwa von 1,5 kg Holzkohle ausgelegt sein. Dabei kann als Holzkohle insbesondere Naturholzkohle wie Hartholzkohle eingebracht werden.

Die Anzünder können aus zu Quadern gepreßten Laubhölzern bestehen, wodurch eine hohe Umweltverträglichkeit gegeben ist.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus dem nachstehend beschriebenden Ausführungsbeispiel.

Es zeigen:
- Fig. 1: eine perspektivische Darstellung eines Holzkohle aufnehmenden Kartons,
- Fig. 2: eine Bodenansicht bzw. ein Bodeneinsatz des Kartons nach Fig. 1 und
- Fig. 3: einen Querschnitt durch den Karton nach Fig. 1.

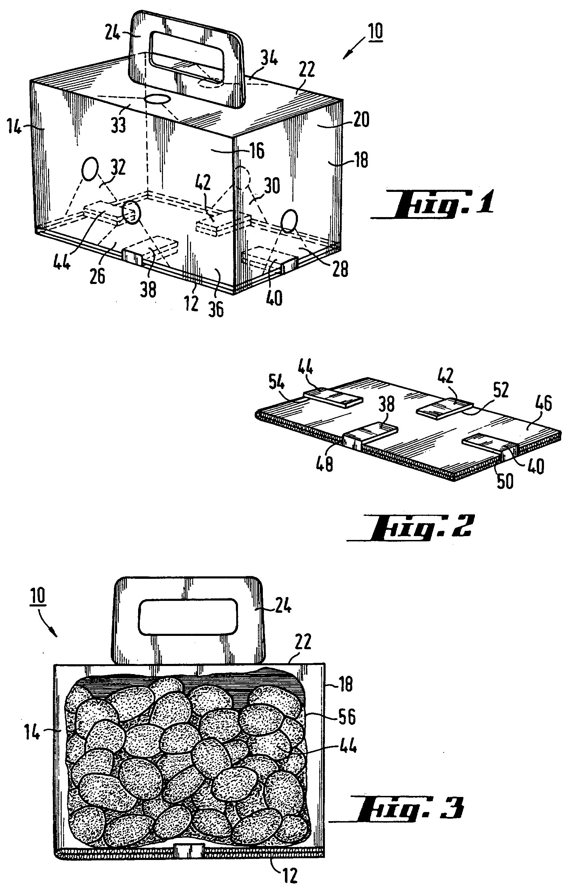

In Fig. 1 ist ein eine Quaderform aufweisendes Behältnis in Form eine Kartons 10 dargestellt, der aus brennbarem Material wie Wellpappe besteht. Das eine Quaderform aufweisende Behältnis 10, das aus Gründen der Vereinfachung nachstehend als Karton bezeichnet wird, weist eine Bodenwandung 12, Seitenwandungen 14, 16, 18, 20 sowie eine als verschließbarer Deckel ausgebildete Kopfwandung 22 auf, von der ein flächiger Handgriff 24 ausgeht. Die Verbindungslinie zwischen dem Handgriff 24 und der Kopfwandung 22 verläuft entlang einer Mittellinie. Auch wenn die Seitenwandungen 14, 16, 18, 20 sowie die Kopfwandung 22 zumindest bereichsweise eigensteif ausgebildet sein sollten, ist eine unsteife Ausbildung gleichfalls möglich.

Im Bodenbereich einer jeden Seitenwandung 14, 16, 18, 20 ist ein im Ausführungsbeispiel dreieckförmiger Abschnitt 26, 28, 30, 32 von einer Perforation umgeben, um durch Herausziehen oder Hineindrücken der Abschnitte 26, 28, 30, 32 entsprechende Öffnungen in den Seitenwandungen 14, 16, 18, 20 herzustellen. Vorzugsweise werden die Abschnitte 26, 28, 30, 32 zunächst hineingedrückt und sodann nach außen geklappt, wobei die Abschnitte 26, 28, 30, 32 mit ihrer Basis mit der Seitenwandung 14, 16, 18 bzw. 20 verbunden bleiben. Oberhalb des Abschnitts 26, 28, 30, 32 kann gegebenenfalls ein Loch vorgesehen sein, um den Abschnitt 26, 28, 30, 32 problemlos erfassen zu können.

In der Kopfwandung 22 sind auf gegenüberliegenden und symmetrisch zu dem Griff 24 verlaufenden Seiten ebenfalls dreieckförmige Abschnitte 33, 34 vorhanden, die von einer Perforation umgeben sind. Dabei verlaufen die Basisschenkel der Dreiecke 33, 34 entlang der Seitenwandungen 14, 20. Entsprechend sind die Basisschenkel der Dreiecke 26, 28, 30, 32 bodenseitig angeordnet.

Entlang der Bodenfläche 36 der Bodenwandung 12, und zwar von den Bereichen 26, 28, 30, 32 ausgehend sind in Draufsicht eine Kreuzform bildende quaderförmige Anzünder 38, 40, 42, 44 befestigt wie festgeklebt oder gehen von einem in den Karton 10 einsetzbaren Zwischenboden 46 aus, und zwar von Aussparungen oder Schlitzen 48, 50, 52, 54, in die die Anzünder 38, 40, 42, 44 eingeklemmt werden. Hierdurch ist ein sicheres Fixieren gegeben, ohne dass zusätzlich ein Kleber benötigt wird. Somit besteht die gesamte Anordnung aus rückstandsfrei und umweltfreundlich verbrennbaren Teilen. Dabei ist die Geometrie des Zwischenbodens oder der Einlage 46 an die Innenabmessungen des Kartons 10 bzw. Bodens 12 derart angepasst, dass ein ungewünschtes Verrutschen unterbleibt. Die Bodenfläche 12 weist vorzugsweise eine Fläche von in etwa 19 x 19 cm² bis 20 x 20 cm² auf. Die Höhe des Kartons 10 beträgt in etwa 15 cm.

Die Anzünder 38, 40, 42, 44 sind bei entfernten Abschnitten 26, 28, 30, 32 vom Äußeren des Kartons 10 aus zugänglich und somit anzündbar. In dem quader- oder würfelförmigen Karton 10 ist sodann vorzugsweise aus Hartholz hergestellte Holzkohle 44 eingebracht, die mittels der Anzünder 38, 40, 42, 44 dann entzündbar ist, wenn durch Entfernen der Abschnitte 26, 28, 30, 32, 33, 34 in den Karton 10 Löcher eingebracht sind, um einen Zug zu ermöglichen. Da das Kartonmaterial brennbar ist, bildet sich durch die Geometrie des Kartons 10 bedingt nach Anstecken der Anzünder 38, 40, 42, 44 ein starkes Feuer aus, woduch wiederum die erforderliche Glut der Holzkohle 44 entsteht. Dabei wird die Holzkohle 44 vorzugsweise zuvor in eine Aufnahme wie Tüte 56 eingefüllt und sodann in den Karton 10 eingebracht. Somit ist ein Verschmutzen des Kartons 10 beim Schließen des Deckels 22 ausgeschlossen.

Ist im Ausführungsbeispiel in jeder Seitenwandung 14, 16, 18, 20 nach Entfernen der entsprechenden Abschnitte 26, 28, 30, 32 eine Öffnung vorgesehen, so können selbstverständlich auch mehr oder weniger Öffnungen vorhanden sein. Auch ist es nicht zwingend erforderlich, dass in jeder Seitenwandung 14, 16, 18, 20 eine Öffnung ausgebildet wird. Gleiche Überlegungen gelten in Bezug auf die in der als verschließbarer Deckel ausgebildeten Kopfwandung 22 vorgesehenen Öffnungen 33, 34. Auch können die deckelseitigen Öffnungen 33, 34 durch im oberen Rand der Seitenwandungen 14, 16, 18, 20 verlaufende Öffnungen ersetzt oder ergänzt werden.

Abweichend vom Stand der Technik ist es nicht erforderlich, zunächst Holzkohle an einem Platz auszuschütten, wodurch eine unerwünschte Staubbildung entstehen kann. Dadurch, dass die Holzkohle in dem Behältnis angezündet wird, erfolgt auf eng begrenztem Bereich eine Glutbildung im erforderlichen Umfang, wobei aufgrund der verwendeten Materialien eine hohe Umweltfreundlichkeit gegeben ist. Dies wird nicht nur durch die vorzugsweise aus Harthölzern hergestellte Holzkohle und den zu Quadern gepreßten vorzugsweise aus Laubhölzern bestehenden Anzündern, sondern durch das Material des Kartons 10 sowie die die Holzkohle aufnehmende Tüte 56 selbst sichergestellt, die sämtlichst umweltfreundlich verbrennen.

Durch die Quader- bzw. Würfelform des Behältnisses 10 ergeben sich auch Vorteile hinsichtlich Lagerung bzw. des Transports und des einfachen Zusammenstellens zu Gebinden.

## Patentansprüche

1. Anordnung zur Erzeugung einer Grillkohlenglut,
**dadurch gekennzeichnet**
dass in einem brennbaren Behältnis (10) mit zumindest eigensteifer Bodenwandung (12) und zumindest bereichsweise eigensteifer Seitenwandung (14, 16, 18, 20) sowie einer Kopfwandung (22) Holzkohle (44) eingebracht ist, dass in zumindest einer Seitenwandung eine erste Öffnung vorhanden oder bei zuvor geschlossenem oder weitgehend geschlossenem Behältnis durch Entfernen eines Wandbereichs (26, 28, 30, 32) ausbildbar ist, dass von oder in etwa von der Öffnung ausgehend entlang der Innenfläche der Bodenwandung (12) zumindest ein Anzünder (38, 40, 42, 44) verläuft und dass in der Kopfwandung (22) oder im kopfwandseitigen Bereich von zumindest einer Seitenwandung zumindest eine zweite Öffnung (33, 34) vorhanden oder einbringbar ist.

2. Anordnung nach Anspruch 1,
**dadurch gekennzeichnet**,
dass das Behältnis (10) eine Quader- wie Würfelform aufweist und eigensteif ausgebildet ist und dass vorzugsweise in jeder Seitenwandung (14, 16, 18, 20) im Bereich der Bodenwandung (12) jeweils eine erste Öffnung durch Entfernen wie Eindrücken und/oder Herausziehen eines vorzugsweise von einer Perforation umgebenen Wandabschnitts (26, 28, 30, 32) einbringbar ist, von der ein vom Behältnisäußeren her ein insbesondere eine Quaderform aufweisender Anzünder (38, 40, 42, 44) zugänglich ist, wobei der Anzünder insbesondere ein aus Laubhölzern gepreßter Quader ist.

3. Anordnung nach zumindest einem der vorhergehenden Ansprüche,
**dadurch gekennzeichnet**,
dass die von jeweils einer ersten Öffnung (26, 28, 30, 32) ausgehenden Anzüder (38, 40, 42, 44) entlang von sich unter einem rechten Winkel schneidenden Geraden verlaufen.

4. Anordnung nach zumindest einem der vorhergehenden Ansprüche,
**dadurch gekennzeichnet**,
dass die erste und/oder die zweite Öffnung durch Entfernen eines vorzugsweise perforierten Bereichs (26, 28, 30, 32, 33, 34) der Seitenwandungen (14, 16, 18, 20) bzw. Kopfwandung (22) ausbildbar ist, wobei insbesondere die erste Öffnung eine Dreiecksform mit bodenwandseitigem Basisschenkel aufweist.

5. Anordnung nach zumindest einem der vorhergehenden Ansprüche,
**dadurch gekennzeichnet**,
dass entlang einer Mittellinie der als verschließbarer Deckel ausgebildeten Kopfwandung (22) eine Handhabe wie flächiger Griff (24) verläuft, der seinerseits vorzugsweise von der Kopfwandung ausgeht, wobei insbesondere zu jeder Seite der Handhabe eine zweite Öffnung verläuft, die vorzugsweise eine Dreiecksform mit seitenwandseitig verlaufendem Basisschenkel aufweist.

6. Anordnung nach zumindest einem der vorhergehenden Ansprüche,
**dadurch gekennzeichnet**,
dass das Fassungsvermögen des Behältnisses (10) in etwa 1 bis 2 kg, insbesondere 1,5 kg Holzkohle beträgt, die vorzugsweise Naturholzkohle aus insbesondere Harthölzern ist.

7. Anordnung nach zumindest einem der vorhergehenden Ansprüche,
**dadurch gekennzeichnet**,
dass der Anzünder (38, 40, 42) innenseitig an der Bodenwandung (22) befestigt wie geklebt ist.

8. Anordnung nach zumindest einem der vorhergehenden Ansprüche,
**dadurch gekennzeichnet**,
dass in das eigensteife Behältnis (10) eine bodenseitige Einlage (46) mit von dieser ausgehenden Anzündern (38, 40, 42, 44) einbringbar ist und/oder dass die Bodenwandung (22) bzw. die entlang dieser verlaufende Einlage Aufnahmen wie Vertiefungen, Schlitze, Ausschnitte, Nuten oder ähnliches (48, 50, 52, 54) zum Festlegen bzw. Befestigen der Anzünder (38, 40, 42, 44) aufweist.

9. Anordnung nach zumindest einem der vorhergehenden Ansprüche,
**dadurch gekennzeichnet,**
dass die Holzkohle (44) in einer gesonderten Aufnahme wie Tüte (56) in dem Behältnis (10) wie Karton aus Wellpappe vorliegt.

10. Anordnung zur Erzeugung einer Grillkohlenglut,
**dadurch gekennzeichnet**
dass in einem eigensteifen brennbaren eine Quaderform aufweisenden Behältnis (10) mit Bodenwandung (12), Seitenwandungen (14, 16, 18, 20) sowie Kopfwandung (22) in einer brennbaren Aufnahme (56) abgefüllte Holzkohle (44) eingebracht ist, dass zur Erzeugung der Glut in zumindest einer Seitenwandung des zuvor allseitig oder im wesentlichen allseitig geschlossenen Behältnisses eine erste Öffnung durch Entfernen eines Wandbereichs (26, 28, 30, 32) ausbildbar ist, dass von oder in etwa von der Öffnung ausgehend entlang der Innenfläche der Bodenwandung (12) oder einer Einlage zumindest ein Anzünder (38, 40, 42, 44) verläuft und dass in der Kopfwandung (22) oder im kopfwandseitigen Bereich von zumindest einer Seitenwandung zumindest eine zweite Öffnung (33, 34) einbringbar ist, wobei die jeweilige Öffnung jeweils ein von einer Perforation ode einer Stanzung umgebener Bereich der Seitenwandung und/oder der Kopfwandung ist.
